# EUROPEAN PATENT APPLICATION

(11) **EP 4 793 808 A1**
(43) Date of publication of application: **19.08.2026**
(21) Application number: 25197281.6
(22) Date of filing: 21.08.2025
(51) Int. Cl.: G06F 21/62, G06F 40/20, G06F 40/279, G06F 40/295, G06F 40/30, G06N 3/0475, H04W 12/02

(54) **PERSONAL INFORMATION DETECTION SYSTEM**

(30) Priority: 13.02.2025 US 202519052521
(71) Applicant: Nomura Research Institute, Ltd., Chiyoda-ku Tokyo 100-0004 (JP)
(72) Inventor: TAGOMORI, Teruhiro, Irvine, CA, 92614 (US)
(74) Representative: Hoffmann Eitle

(57) **Abstract**

Generative AI to which the predetermined trained model 3 is applied is caused to detect PII included in a sentence, based on request data including the designated sentence, an entity of PII to be detected, and instruction contents regarding a context of the sentence desired to be considered, and a detection result is output based on response data from the generative AI.

## Description

### BACKGROUND OF THE INVENTION

### 1. TECHNICAL FIELD

The present invention relates to a security technology and particularly relates to a technology effective when applied to a personal information detection system that detects personally identifiable information (PII).

### 2. DESCRIPTION OF THE RELATED ART

With increasing demands for personal information protection, in order to avoid a situation in which personal information is leaked when using a mail, a social networking service (SNS), a web application, or the like, many techniques and solutions for detecting whether no PII is included in data exchanged in an information processing system or a network have been studied and provided.

For example, JP 2023-18360 A describes an information processing system including a holding unit that holds conversation contents between a first terminal device and the information processing system, a personal information detection unit that detects personal information from the conversation contents, and a communication unit that transmits, to a second terminal device, a list of conversation contents in which whether the personal information is included in the conversation contents is set, when the list of conversation contents is requested from the second terminal device. Here, it is further described that, in response to a request for anonymizing the personal information from the second terminal device, a character string same as the personal information linked with the conversation contents is specified from the conversation contents, and the personal information in the conversation contents is anonymized.

### SUMMARY OF THE INVENTION

Many conventional PII detection techniques, tools, solutions, and the like are manufactured overseas and are often practically insufficient, for example, in terms of specialty in detecting PII in English but difficulty in support of Japanese, or due to dictionary-based PII signatures that lack comprehensiveness and are not allowed to cope with input fluctuations. Meanwhile, as in Private AI that is a service of Private AI Inc. (https://www.private-ai.com/), there are also services that have noticeably high capability of detecting PII in Japanese (supporting many entities designated in the Personal Information Protection Act), have a detection function utilizing not only dictionary-based signatures but also artificial intelligence (AI), have high comprehensiveness, and can also cope with input fluctuations.

In many of these conventional techniques, when a specific character string that may correspond to PII is included in a sentence, the specific character string is regularly detected as PII without considering in what contextual situation or context the specific character string is included. For example, the postal code number may be included in a sentence in a form relating to a specific individual in one case, or may be included as general information regardless of personal information in another case. In the latter case, detection of the included postal code number as PII may sometimes be regarded as excessive detection.

Thus, an object of the present invention is to provide a personal information detection system capable of detecting PII in consideration of a context of a sentence. The above-mentioned and other objects and novel features of the present invention will become apparent from the description herein and the accompanying drawings.

A representative embodiment of the invention disclosed in the present application will be briefly outlined as follows.

A personal information detection system as a representative embodiment of the present invention is configured to detect personally identifiable information (PII) included in a sentence, the personal information detection system causing generative artificial intelligence (AI) to which a predetermined trained model is applied, to detect PII included in the sentence, based on request data including the designated sentence, an entity of PII to be detected, and instruction contents regarding a context of the sentence desired to be considered, and outputting a detection result, based on response data from the generative AI.

An effect of the representative embodiment of the invention disclosed in the present application will be briefly described as follows.

That is, according to the representative embodiment of the present invention, PII may be detected in consideration of a context of a sentence.

### BRIEF DESCRIPTION OF THE DRAWINGS

FIG. 1 is a diagram illustrating an outline of an exemplary configuration of a personal information detection system that is an embodiment of the present invention;
FIG. 2 is a diagram illustrating an outline of an exemplary flow of a PII detection process in an embodiment of the present invention;
FIG. 3 is a diagram illustrating an outline of an exemplary PII detection process that does not consider a context;
FIG. 4 is a diagram illustrating an outline of an example of the PII detection process in an embodiment of the present invention;
FIG. 5 is a diagram illustrating an outline of another exemplary PII detection process that does not consider a context;
FIG. 6 is a diagram illustrating an outline of another example of the PII detection process in an embodiment of the present invention;
FIG. 7 is a diagram illustrating an outline of another example of the PII detection process in an embodiment of the present invention; and
FIG. 8 is a diagram illustrating an outline of another example of the PII detection process in an embodiment of the present invention.

### DETAILED DESCRIPTION

Hereinafter, embodiments of the present invention will be described in detail with reference to the accompanying drawings. In all the drawings for explaining the embodiments, the same portions are denoted by the same reference signs in principle, and duplicated descriptions thereof will be omitted. Meanwhile, a constituent part denoted by a reference sign in the description with reference to one drawing may be mentioned with the same reference sign denoted in the description with reference to other drawings in which the constituent part is not illustrated again.

### <Overview>

A personal information detection system that is an embodiment of the present invention is a system configured to detect PII included in a sentence and carries out detection as to, for example, whether PII is included in a sentence or a text input from a user, using generative AI. The personal information detection system has a function of specifying a position of the PII in the sentence if included, and additionally, replacing a character string detected as PII with a predetermined character string to conceal the PII in an output.

As described above, as a service for detecting PII, Private AI has noticeably high detection capability for PII in Japanese, has a detection function utilizing not only dictionary-based signatures but also machine learning, has high comprehensiveness, and can also cope with input fluctuations. In contrast to this, the personal information detection system of the present embodiment constructs and fine-tunes a unique model related to generative AI (for example, GPT (registered trademark)-4o mini available from OpenAI (registered trademark) Inc., or the like is used) such that an entity comparable to a general PII detection solution can be detected and uses a model further trained and fine-tuned so as to additionally enable PII detection in consideration of a context of a sentence. This may enable detecting PII, based on an instruction given by the user regarding a context desired to be considered.

### <System Configuration>

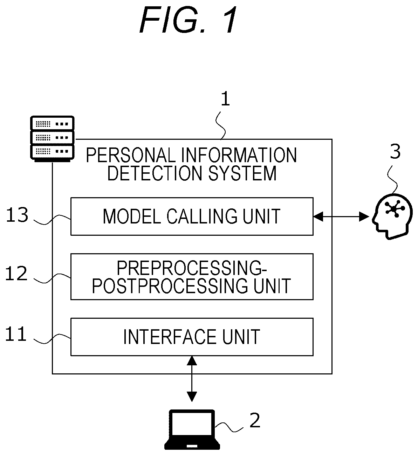

FIG. 1 is a diagram illustrating an outline of an exemplary configuration of the personal information detection system that is an embodiment of the present invention. A personal information detection system 1 is constituted by, for example, a server device or a virtual server constructed on a cloud computing service and achieves various functions related to PII detection with a central processing unit (CPU) (not illustrated) executing middleware such as an operating system (OS), a database management system (DBMS), and a web server program loaded on a memory from a recording device such as a hard disk drive (HDD) or a solid state drive (SSD), and software operating on the middleware.

The personal information detection system 1 includes units such as an interface unit 11, a preprocessing-postprocessing unit 12, and a model calling unit 13 implemented as software, for example.

The interface unit 11 has a function of providing an interface for a client 2 (an information processing terminal, an application, or the like used by the user) that uses the PII detection function according to the present embodiment. An instruction or a request related to PII detection is received from the user (client 2) via the interface unit 11 and responded to the user (client 2) with a detection result.

For example, in one configuration, an interface may be provided in the form of an application programming interface (API) and called from an application or a program (not illustrated) on the client 2, or in another configuration, a user interface using a screen may be provided and accessed from a web browser (not illustrated) on the client 2. The present embodiment will be described assuming that the interface is provided in the form of the API. Note that, for example, instruction contents related to the PII detection designated as a parameter of the API include a sentence to be subjected to detection, an entity to be detected, instruction contents regarding a context desired to be considered, and the like.

The preprocessing-postprocessing unit 12 has a function of performing preprocessing and postprocessing for the PII detection process by the model calling unit 13 to be described later. That is, based on the instruction contents related to PII detection received by the interface unit 11 from the user, a request related to PII detection is created in the form of data in a JavaScript Object Notation (JSON) format, for example, as preprocessing. In addition, the JSON format data obtained as a response from the PII detection process by the model calling unit 13 is modified and shaped into a style or a format used for output by the interface unit 11, as postprocessing.

The PII detection process by the model calling unit 13 is performed by the generative AI, but the output of the generative AI is not deterministic but fluctuates due to characteristics of the generative AI. Accordingly, for example, there are cases where a character string detected as PII in a sentence or an index indicating a position of a character string obtained by concealing the PII character string is not accurate, or PII is detected and concealed after the original character string is changed. In such cases, for example, a function of detecting and correcting by a deterministic approach is also provided, such as correcting by general text processing based on comparison with the input original character string or the like.

The model calling unit 13 has a function of performing processing of detecting PII with a trained model 3, based on the request (JSON data) related to PII detection passed from the preprocessing-postprocessing unit 12 (in other words, causing the generative AI to which the trained model 3 is applied to perform the PII detection process), and outputting a response (JSON data) to the preprocessing-postprocessing unit 12. As described above, the trained model 3 of the present embodiment is a model that can detect an entity comparable to a general PII detection solution and has been further trained and fine-tuned so as to additionally enable the PII detection in consideration of a context. In this training and fine tuning, for example, a sentence to be subjected to detection of PII, instruction contents regarding a context desired to be considered to be described later, and a detection result for PII based on the instruction contents are used as teacher data.

### <Flow of Process>

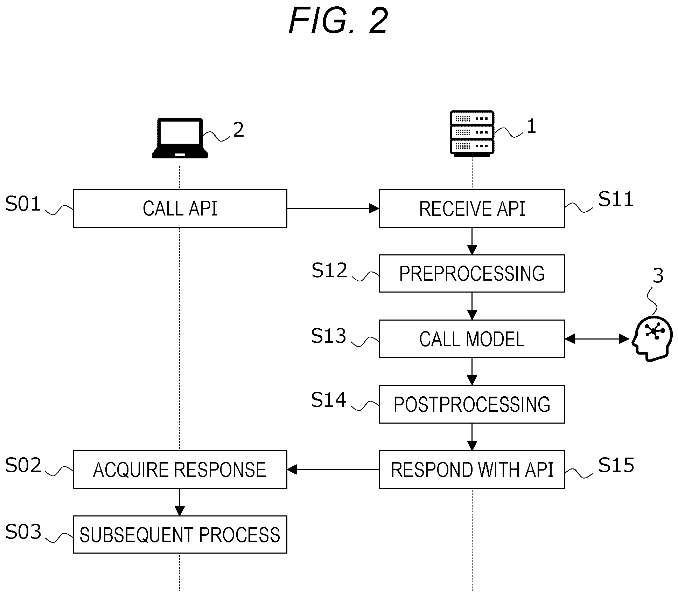

FIG. 2 is a diagram illustrating an outline of an exemplary flow of the PII detection process in an embodiment of the present invention. First, an API provided by the personal information detection system 1 as a PII detection service is called from an application or a program on the client 2 (S01), and the interface unit 11 of the personal information detection system 1 receives the API call (S11). For example, parameters of the API include a sentence or a text to be subjected to detection, a text related to an instruction regarding a context desired to be considered, and the like.

Thereafter, in the personal information detection system 1, the preprocessing-postprocessing unit 12 creates request data in a JSON format, based on parameters of the API input from the user, as preprocessing (S12). Then, the model calling unit 13 inputs the created JSON-format request to the generative AI to which the trained model 3 is applied, to instruct the generative AI on PII detection, and acquires JSON-format data of the response (S13).

Thereafter, as postprocessing, the preprocessing-postprocessing unit 12, for example, corrects the data of the response in the JSON format if applicable and then modifies and shapes the data into a style or a format used for output by the interface unit 11 (S14) and responds to the client 2 as an API output (S15).

When acquiring the API response (S02), the client 2 performs a subsequent process, based on the contents of the API response (S03). The contents of the subsequent process have a unique process depending on the specifications of the client 2, the contents, and the like. For example, when PII is detected, the process can be terminated with an error, or the process can be continued after a warning is output. In addition, it is also conceivable to prompt the user to perform a treatment or handling after interrupting the process.

### <PII Detection>

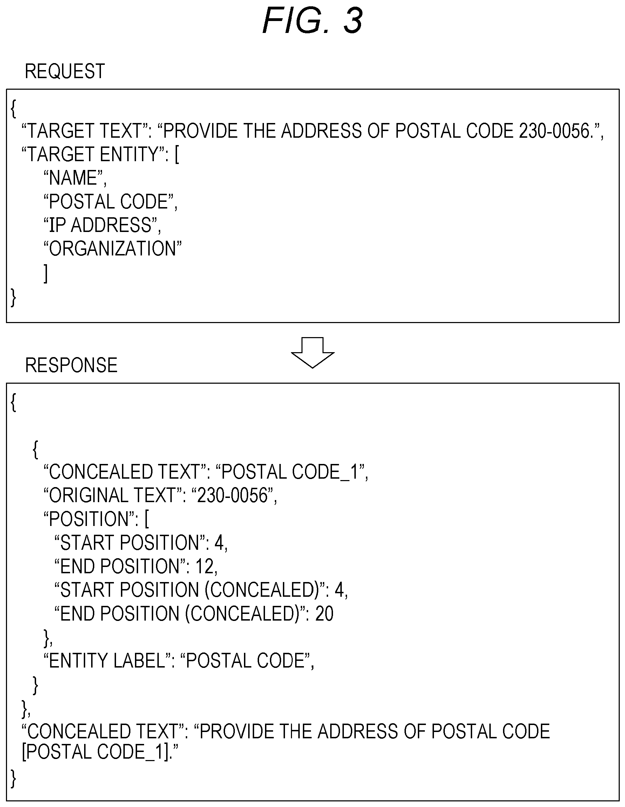

FIG. 3 is a diagram illustrating an outline of an exemplary PII detection process that does not consider a context. Here, for example, exemplary data of a request in a general PII detection solution of a conventional technique using machine learning is illustrated in the upper part, and exemplary data of a response to the request is illustrated in the lower part. Both pieces of data are in JSON format, and the request data in the upper part indicates that a sentence ("Provide the address of postal code 230-0056.") to be subjected to detection of PII and entities ("name", "postal code", "IP address", "organization") to be detected are designated.

In these circumstances, the response data in the lower part indicates that the entity ("postal code") detected as PII, the detected character string ("230-0056"), the character string ("postal code_1") obtained by concealing the detected character string, and the positions (the number of characters from the top) of these character strings in the sentence are set. Furthermore, it is indicated that a sentence ("Provide the address of postal code [postal code_1].") obtained by replacing the character string detected as PII with the concealed character string is set for the entire original sentence.

For example, the postal code does not necessarily correspond to PII in all cases and may sometimes be used in a form not associated with a specific individual at all, like the postal code appearing in the sentence subjected to detection in the example in FIG. 3. In the PII detection mechanism of the conventional technique that does not consider the context of the sentence, there is a case where even such a postal code not associated with an individual is regularly detected as PII only for the reason that the postal code is involved.

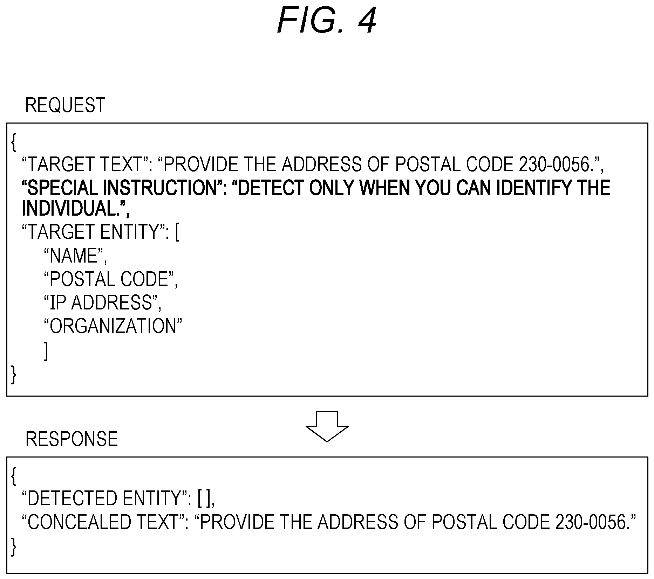

FIG. 4 is a diagram illustrating an outline of an example of the PII detection process in an embodiment of the present invention. In the present embodiment, as described above, it is assumed that the PII detection request includes the instruction contents from the user regarding a context desired to be considered. That is, the example in FIG. 4 indicates that the instruction contents ("Detect only when you can identify the individual.") to the generative AI (trained model 3) is designated by the key of "special instruction" in the request data. As a result, for a sentence similar to the request data in the example in FIG. 3, since the postal code is included in a form in which the individual is not identifiable, the response data in the lower part indicates that no PII has been detected, that is, the postal code has not been detected as PII and has been maintained as it is, as a result of considering the context.

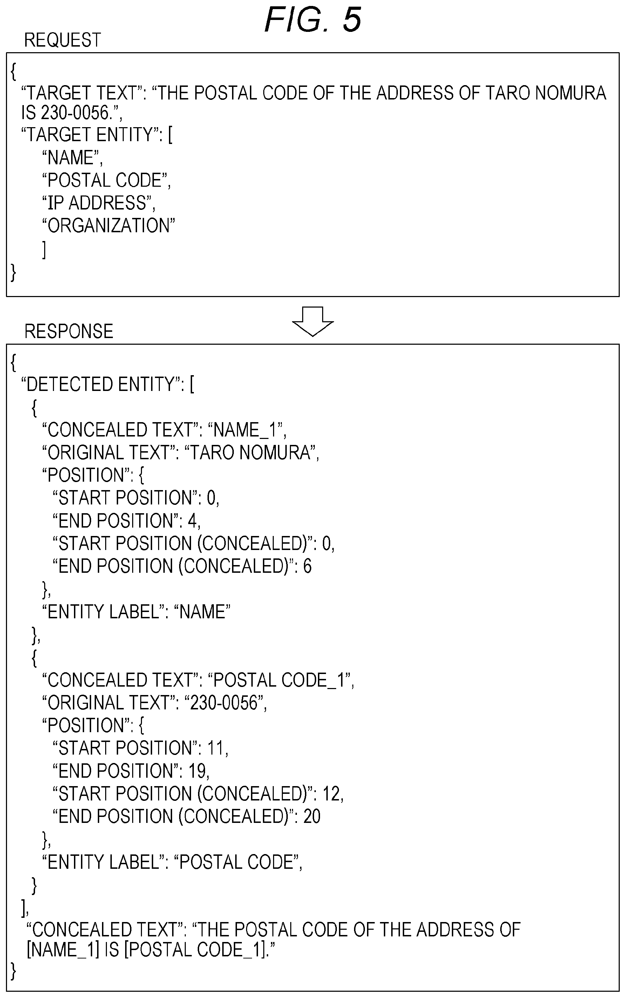

FIG. 5 is a diagram illustrating an outline of another exemplary PII detection process that does not consider a context. Here, it is indicated that the postal code appearing in the sentence ("The postal code of the address of Taro Nomura is 230-0056.") to be subjected to PII detection in the request data in the upper part is associated with a specific individual ("Taro Nomura"). As a result, the response data in the lower part indicates that the character strings of the name ("Taro Nomura") and the postal code ("230-0056") of the specific individual have been detected as PII and have been concealed.

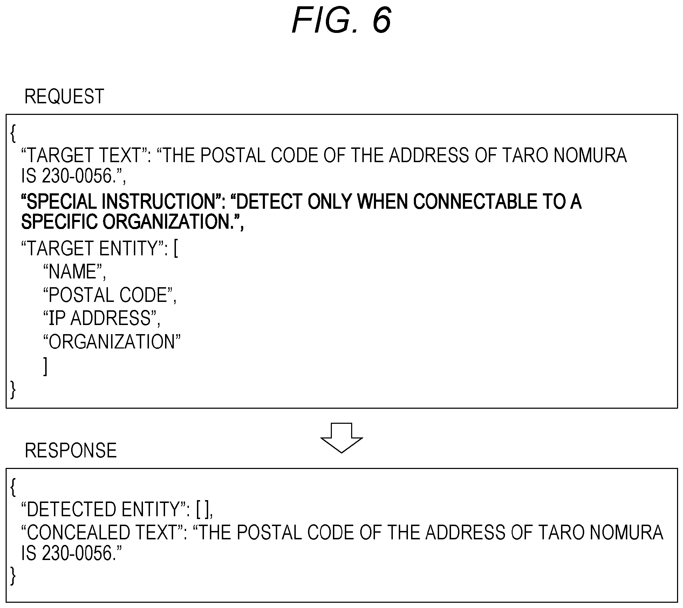

FIG. 6 is a diagram illustrating an outline of another example of the PII detection process in an embodiment of the present invention. For a sentence similar to the request data in the example in FIG. 5, the example in FIG. 6 indicates that an instruction on a context desired to be considered is given with the contents of "Detect only when connectable to a specific organization." as a "special instruction". As a result, for a sentence similar to the request data in the example in FIG. 5, since the postal code is included in a form associated with a specific individual, but is not included in a form associated with a specific organization, the response data in the lower part indicates that no PII has been detected as a result of considering the context.

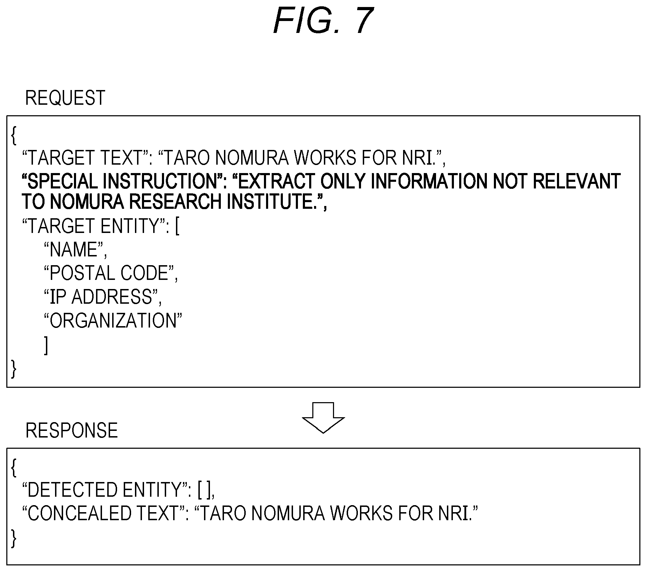

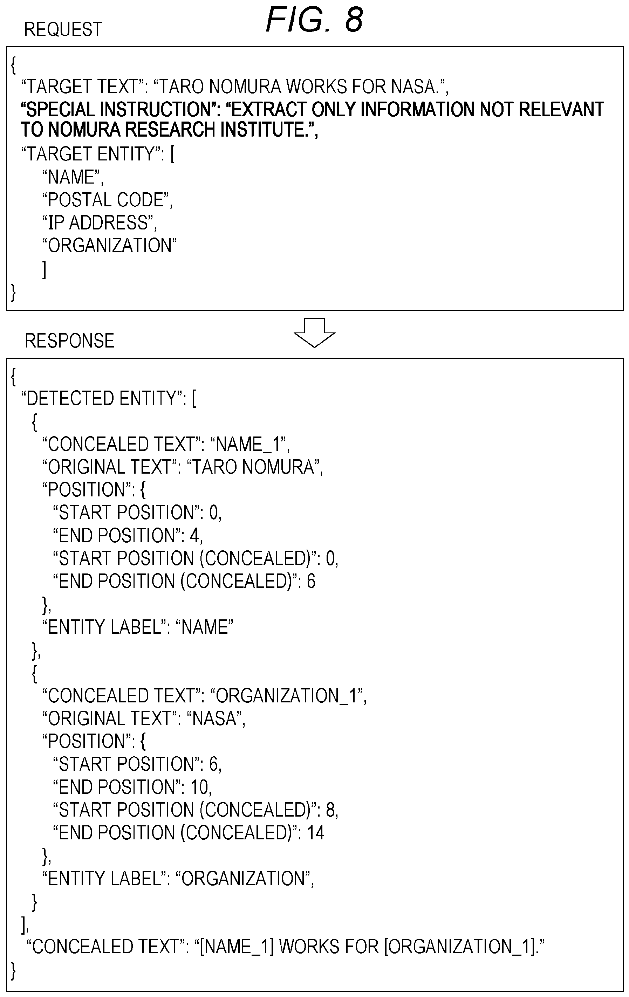

FIGS. 7 and 8 are diagrams illustrating an outline of another example of the PII detection process in an embodiment of the present invention. The example in FIG. 7 indicates that an instruction on a context desired to be considered is given for the sentence ("Taro Nomura works for NRI.") to be subjected to PII detection in the request data in the upper part, with the contents of "Extract only information not relevant to Nomura Research Institute." as a "special instruction". In this sentence to be subjected to detection, since "NRI" is an abbreviation of "Nomura Research Institute" and "Taro Nomura" works for "NRI", there is no information corresponding to "information not relevant to Nomura Research Institute", and the response data in the lower part indicates that no PII has been detected as a result of considering the context.

On the other hand, in the example in FIG. 8, for a "special instruction" similar to the request data in the example in FIG. 7, when the sentence to be subjected to PII detection is "Taro Nomura works for NASA.", both of "NASA" and "Taro Nomura" working there correspond to "information not relevant to Nomura Research Institute", and the response data in the lower part indicates that these character strings have been detected as PII and have been concealed as a result of considering the context.

As described above, according to the personal information detection system 1 that is an embodiment of the present invention, PII may be detected based on the instruction contents given by the user regarding a context desired to be considered for the sentence to be subjected to PII detection, and the position of the detected PII may be specified. Besides, the detected character string may be replaced with a predetermined character string and concealed in an output, which may enable PII detection in consideration of the context of the sentence.

While an aspect of the invention made by the present inventors has been specifically described based on the embodiments, the present invention is not limited to the embodiments described above, and it goes without saying that various modifications may be made without departing from the gist of the present invention. The embodiments above have been described in detail to explain the present invention in an easy-to-understand manner and are not necessarily limited to the embodiments including all the components described. Another component may be added to, deleted from, or replaced with a part of the configuration of each embodiment described above.

Some or all of the components, functions, processing units, processing procedures, and the like described above each may be achieved by hardware being designed as an integrated circuit, for example. Alternatively, the components, functions, and the like described above each may be achieved by software by a processor interpreting and executing a program for achieving its function. Information such as programs, tables, and files for achieving each function may be stored in a recording device such as a memory, a hard disk, or an SSD, or in a recording medium such as an integrated circuit (IC) card, a secure digital (SD) card, or a digital versatile disc (DVD).

Each of the drawings mentioned above illustrates control lines and information lines considered to be necessary for the description and does not necessarily illustrate all the implemented control lines and information lines. It may be considered that almost all the components are mutually coupled in practice.

The present invention is applicable to a personal information detection system configured to detect PII.

## Claims

1. A personal information detection system configured to detect personally identifiable information (hereinafter abbreviated as PII) included in a sentence,
the personal information detection system causing generative artificial intelligence (AI) to which a predetermined trained model is applied, to detect PII included in the sentence, based on request data including the designated sentence, an entity of PII to be detected, and instruction contents regarding a context of the sentence desired to be considered, and outputting a detection result, based on response data from the generative AI.

2. The personal information detection system according to claim 1, wherein
the trained model is trained with a sentence to be subjected to detection, instruction contents regarding a context of the sentence desired to be considered, and information on a detection result for PII included in the sentence when the instruction contents are considered, as teacher data.

3. The personal information detection system according to claim 1, wherein predetermined correction is made on the response data when a detection result is output based on the response data.
